# EUROPÄISCHE PATENTSCHRIFT

(11) **EP 1 020 782 B1**
(45) Veröffentlichungstag und Bekanntmachung des Hinweises auf die Patenterteilung: **13.10.2004**
(21) Anmeldenummer: 99204420.6
(22) Anmeldetag: 20.12.1999
(51) Int. Cl.: G05D 23/02

(54) **Vorrichtung zum umkehrbaren Verstellen eines Ventilstössels**
Device for reversibly positioning a valve stem
Dispositif pour le positionnement réversible d'une tige de valve

(30) Priorität: 15.01.1999 DE 19901283
(43) Veröffentlichungstag der Anmeldung: 19.07.2000
(73) Patentinhaber: Danfoss A/S, 6430 Nordborg (DK)
(72) Erfinder: Larsen, Hans Erik, 8000 Aarhus C (DK); Nielsen, Kuno, 8600 Silkeborg (DK); Kristensen, Preben, 8600 Silkeborg (DK); Seerup, Jörgen, 8320 Marslet (DK)

(56) Entgegenhaltungen:
- EP-A- 0 856 692
- FR-A- 2 751 057

## Beschreibung

Die Erfindung bezieht sich auf eine Vorrichtung zum umkehrbaren Verstellen eines Ventilstößels mit einem Gehäuse, einer Fassung zum Anschluß an ein Ventil, einem zwei gegeneinander verstellbare Teile aufweisenden thermischer Aktuator und zwei wahlweise zu verwendenden Betätigungsstiften, wobei für die eine Verstellart der erste Betätigungsstift von dem ersten Teil und für die andere Verstellart der zweite Betätigungsstift von dem zweiten Teil des Aktuators mitgenommen wird und der jeweils andere Teil des Aktuators am Gehäuse abgestützt ist.

Bei einer bekannten Vorrichtung dieser Art (DE-AS 16 00 713) ist wahlweise der eine oder der andere Betätigungsstift in der Achse des thermostatischen Aktuators einzubauen. Außerdem ist beim Wechsel von der einen zur anderen Betätigungsart nicht nur der Betätigungsstift, sondern auch ein Brückenelement auszuwechseln und eine Federanordnung zu ändern. Man kann daher die Verstellvorrichtung wahlweise für ein normalerweise offenes Ventil (NO) oder ein normalerweise geschlossenes Ventil (NC) verwenden, muß aber gegebenenfalls einen mühsamen Umbau vornehmen.

Ferner ist eine Verstellvorrichtung bekannt (EP 0 856 692 A1), die für ein normalerweise geschlossenes Ventil bestimmt ist. Hier ist der Betätigungsstift ständig am Rand eines Topfes montiert, der den thermostatischen Aktuator übergreift und dessen Boden durch eine Feder kraftschlüssig an dem dem Betätigungsstift abgewandten Teil des Aktuators gehalten wird. Da der Betätigungsstift gegenüber der Aktuatorachse versetzt ist, kann der Hubweg des Betätigungsstiftes den Aktuator teilweise überlappen, so daß die Verstellvorrichtung eine geringe Höhe hat.

Der Erfindung liegt die Aufgabe zugrunde, eine Vorrichtung der eingangs beschriebenen Art anzugeben, die eine erleichterte Umstellung von der einen Verstellart zur anderen Verstellart ermöglicht.

Diese Aufgabe wird erfindungsgemäß dadurch gelöst, daß die beiden Betätigungsstifte ständig montiert, aber gegeneinander versetzt sind und daß die Betätigungsstifte und die Fassung relativ zueinander derart verlagerbar sind, daß die Fassung wahlweise mit dem ersten oder zweiten Betätigungsstift ausgerichtet ist.

Bei dieser Konstruktion erfordert ein Wechsel der Verstellart keinen Austausch der Betätigungsstifte. Vielmehr wird der benötigte Betätigungsstift durch eine relative Verlagerung zwischen den Betätigungsstiften und der Fassung wirksam gemacht. Da die Betätigungsstifte ständig montiert sind, können auch die Kraftübertragungswege zwischen Aktuator und Betätigungsstift weitgehend vorgegeben werden, so daß beim Wechsel der Verstellart zusätzlich zur Verlagerung der Fassung höchstens kleine Änderungen an der Verstellvorrichtung vorgenommen werden müssen.

Vorzugsweise sind die Betätigungsstifte zu beiden Seiten der Aktuatorachse angeordnet. Auf diese Weise erhalten die Betätigungsstifte den größtmöglichen Abstand voneinander, aber den kleinstmöglichen Abstand von der Achse des kraftgebenden Aktuators.

Bei einer bevorzugten Ausführungsform ist dafür gesorgt, daß die Fassung und die Betätigungsstifte relativ zueinander geradlinig versetzbar sind.

Eine ebenfalls günstige Alternative besteht darin, daß die Fassung und die Betätigungsstifte relativ zueinander um eine Achse drehbar sind.

Konstruktiv empfiehlt es sich, daß der Aktuator zwischen den Böden eines inneren und eines äußeren Topfes angeordnet ist und daß der äußere Topf den ersten Betätigungsstift und der innere Topf den zweiten Betätigungsstift trägt. Durch die Verwendung des inneren und äußeren Topfes ergibt sich bei geringem Platzaufwand eine gute Führung für die beiden Betätigungsstifte.

Besonders günstig ist es, daß eine stärkere erste Feder den äußeren Topf gegen einen gehäusefesten Anschlag drückt, daß eine schwächere zweite Feder den inneren Topf gegen einen Anschlag am äußeren Topf drückt und daß zwischen dem Boden des inneren Topfes und einer gehäusefesten Abstützung ein Freiraum vorgesehen ist, in den zum Wechsel der Verstellart ein Distanzstück einschiebbar oder aus ihm herausnehmbar ist. Das Distanzstück ist das einzige Bauelement, das bei einem Wechsel der Verstellart außer der Verlagerung der Fassung gehandhabt werden muß. Der Wechsel ist daher sehr einfach zu vollziehen.

Des weiteren empfiehlt es sich, daß das Gehäuse eine stirnseitige Öffnung hat, in der der Boden des äußeren Topfes angeordnet ist. Wenn der Boden aus der Öffnung heraustritt, ist dies bei normalerweise geschlossenem Ventil ein Zeichen für die Funktionsfähigkeit und bei normalerweise offenem Ventil ein Zeichen dafür, daß der Betätigungsstift eine Endlage erreicht hat.

Vorzüge bietet es auch, daß die Außenseite des Bodens des äußeren Topfes eine Vertiefung für ein Werkzeug zum Verdrehen der Betätigungsstifte relativ zur Fassung aufweist. Ein einfaches Werkzeug, beispielsweise eine Münze, genügt, um die Fassung zu verlagern.

Die Erfindung wird nachstehend anhand in der Zeichnung dargestellter bevorzugter Ausführungsbeispiele näher beschrieben. Hierin zeigen:
- Fig. 1: einen Längsschnitt durch eine erfindungsgemäße Verstellvorrichtung in der NC-Verstellart,
- Fig. 2: eine Ansicht von unten auf Fig. 1,
- Fig. 3: einen Längsschnitt durch eine Verstellvorrichtung gemäß Fig. 1 in der NO-Verstellart,
- Fig. 4: einen Längsschnitt durch eine abgewandelte Ausführungsform in der NC-Verstellart und
- Fig. 5: einen Längsschnitt durch die Verstellvorrichtung der Fig. 4 in der NO-Verstellart.

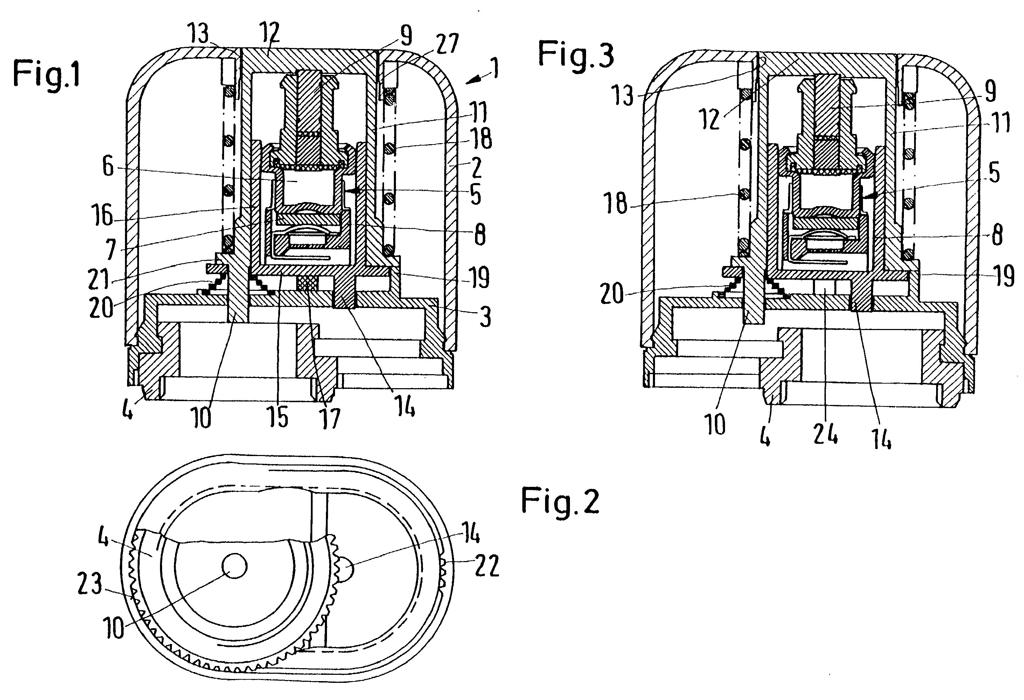

Bei der Ausführungsform der Fig. 1 bis 3 weist ein Gehäuse 1 eine Haube 2 und ein Unterteil 3 auf. Das Gehäuse 1 kann mit Hilfe einer Fassung 4 auf ein Ventilgehäuse aufgesetzt werden.

Im Gehäuse befindet sich ein thermischer Aktuator 5, dessen Dehnstoff 6, beispielsweise Wachs, durch ein Heizelement 7 beheizbar ist. Der Aktuator 5 besteht aus zwei Teilen, nämlich dem ersten Teil 9 in der Form eines Kolbens, der sich in Folge Wärmeausdehnung des Dehnstoffes nach außen verschieben läßt, und dem zweiten Teil 8 in der Form eines Dehnstoff 6 und Heizelement 7 aufweisenden Korpus.

Ein erster Betätigungsstift 10, der mit dem Ventilstößel eines normalerweise geschlossenen Ventils zusammenwirken kann, ist am Rande eines Topfes 11 angebracht, dessen Boden 12 in einer Öffnung 13 des Gehäuses 1 angeordnet ist. Ein zweiter Betätigungsstift 14 ist am Boden 15 eines inneren Topfes 16 vorgesehen. In den Freiraum zwischen dem Boden 15 und dem Unterteil 3 kann ein Distanzstück 17 eingebracht werden.

Eine stärkere Feder 18 drückt den äußeren Topf 11 gegen einen gehäusefesten Anschlag 19 am Unterteil 3. Eine schwächere Feder 20 drückt den inneren Topf 16 gegen einen Anschlag 21 am äußeren Topf. Die Fassung 4 ist aus der in Fig. 1 und 2 veranschaulichten Stellung, in der die Fassungsachse mit dem ersten Betätigungsstift 10 übereinstimmt, in die in Fig. 3 veranschaulichte Lage versetzbar, in der die Fassungsachse mit dem Betätigungsstift 14 übereinstimmt. Die jeweilige Stellung der Fassung 4 wird durch die angedeutete Innenverzahnung 22 und Außenverzahnung 23 gesichert. Außerdem ist veranschaulicht, daß die Öffnung 13 mit einer Führungswand 27 versehen ist, um den äußeren Topf 11 sicher zu führen.

Wenn die Verstellvorrichtung für ein normalerweise geschlossenes NC-Ventil bestimmt ist und die Form der Fig. 1 und 2 besitzt, ergibt sich die folgende Funktion: Bei einer Beheizung stützt sich der zweite Teil 8 des Aktuators 5 unter Zwischenschaltung des Bodens 15 und des Distanzstückes 17 auf dem Unterteil 3 des Gehäuses ab, während sich der erste Teil 9 des Aktuators 5 nach außen bewegt und dabei den äußeren Topf 11 gegen die Kraft der Feder 18 und damit auch den ersten Betätigungsstift 10 mitnimmt. Durch Heraustreten des Bodens 12 aus der Öffnung 13 ist erkennbar, daß die Verstellvorrichtung in Betrieb ist. Durch Wahl der Höhe des Distanzstückes 17 kann man eine Anpassung der Ruhelage des Betätigungsstiftes 10 vornehmen.

Wenn die Verstellvorrichtung für ein normalerweise offenes NO-Ventil bestimmt ist, wird es in die Form der Fig. 3 gebracht. Hierzu sind lediglich zwei Schritte zu vollführen. Erstens wird die Fassung 4 mit dem zweiten Betätigungsstift 14 in Ausrichtung gebracht. Zweitens wird das Distanzstück 17 durch eine seitliche Öffnung 24 entfernt. Wenn nunmehr eine Beheizung erfolgt, wandert der zweite Betätigungsstift 14 zur Fassung 4 hin, weil sich der erste Teil 9 des Aktuators 5 gegen den Boden 12 des äußeren Topfes 11 abstützt und dieser Topf durch die stärkere Feder 18 gegen den gehäusefesten Anschlag 19 gehalten wird. Der zweite Teil 8 des Aktuators 5 bewegt sich daher unter Zusammenpressung der schwächeren Feder 20 in Richtung auf das zu verstellende Ventil. Stößt der Betätigungsstift 14 gegen ein Hindernis, insbesondere, wenn das betätigte Ventilverschlußstück den Sitz erreicht, wandert der äußere Topf 11 gegen die Kraft der Feder 18 nach außen, was wiederum durch das Heraustreten des Bodens 12 aus der Öffnung 13 erkennbar ist.

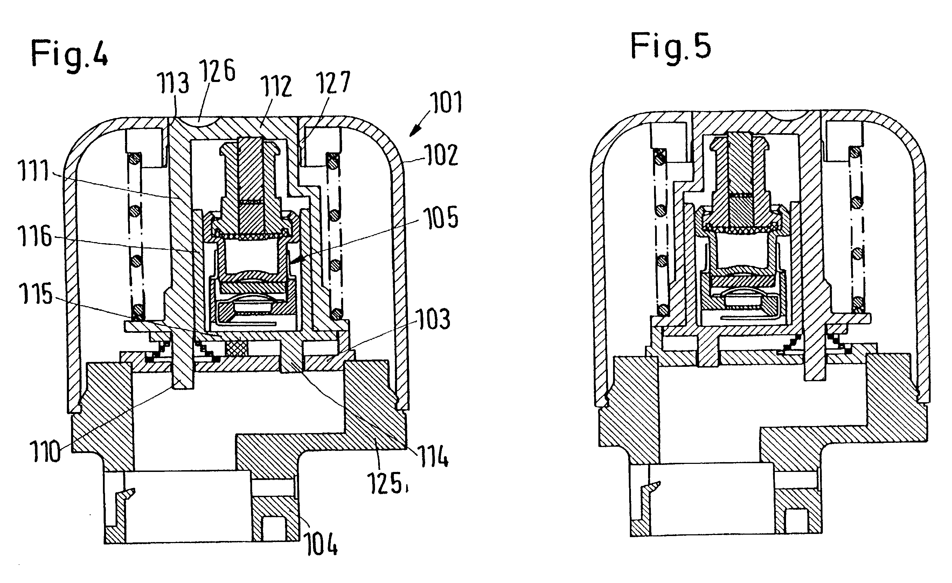

Bei den Fig. 4 und 5 werden für entsprechende Teile um 100 erhöhte Bezugszeichen gegenüber den Fig. 1 bis 3 verwendet. Die Verstellung der beiden Betätigungsstifte 110 und 114 durch den thermostatischen Aktuator 105 ist identisch mit dem vorangegangenen Beispiel. Unterschiedlich ist im wesentlichen, daß das Gehäuse 101 eine Grundplatte 125 mit kreisförmigem Querschnitt aufweist, die einstückig mit einer exzentrisch angeordneten Fassung 104 verbunden ist. Durch eine Relativdrehung zwischen dem Unterteil 103 und der Grundplatte 125 kann man die Fassung 104 wahlweise mit dem ersten Betätigungsstift 110 (Fig. 4) oder dem zweiten Betätigungsgstift 114 (Fig. 5) in Ausrichtung bringen. Um diese Drehung zu bewerkstelligen, ist im Boden 112 des äußeren Topfes 111 eine Vertiefung 126 vorgesehen, in die ein Werkzeug, wie eine Münze, eingesetzt werden kann.

## Patentansprüche

1. Vorrichtung zum umkehrbaren Verstellen eines Ventilstößels mit einem Gehäuse (1,101), einer Fassung (4,104) zum Anschluß an ein Ventil, einem zwei gegeneinander verstellbare Teile (8,9) aufweisenden thermischer Aktuator (5,105) und zwei wahlweise zu verwendenden Betätigungsstiften, (10,14,110,114) wobei für die eine Verstellart der erste Betätigungsstift (10,110) von dem ersten Teil (8) und für die andere Verstellart der zweite Betätigungsstift (14,114) von dem zweiten Teil (9) des Aktuators mitgenommen wird und der jeweils andere Teil des Aktuators am Gehäuse abgestützt ist, **dadurch gekennzeichnet, daß** die beiden Betätigungsstifte (10, 14; 110, 114) ständig montiert, aber gegeneinander versetzt sind und daß die Betätigungsstifte (10, 14; 110, 114) und die Fassung (4; 104) relativ zueinander derart verlagerbar sind, daß die Fassung (4; 104) wahlweise mit dem ersten oder zweiten Betätigungsstift ausgerichtet ist.

2. Vorrichtung nach Anspruch 1, **dadurch gekennzeichnet, daß** die Betätigungsstifte (10, 14; 110, 114) zu beiden Seiten der Aktuatorachse angeordnet sind.

3. Vorrichtung nach Anspruch 2, **dadurch gekennzeichnet, daß** die Fassung (4) und die Betätigungsstifte (10, 14) relativ zueinander geradlinig versetzbar sind.

4. Vorrichtung nach Anspruch 2, **dadurch gekennzeichnet, daß** die Fassung (104) und die Betätigungsstifte (110, 114) relativ zueinander um eine Achse drehbar sind.

5. Vorrichtung nach einem der Ansprüche 1 bis 4, **dadurch gekennzeichnet, daß** der Aktuator (5; 105) zwischen den Böden (12, 15; 112, 115) eines inneren und eines äußeren Topfes (11, 16; 111, 116) angeordnet ist und daß der äußere Topf (11; 111) den ersten Betätigungsstift (10; 110) und der innere Topf (16; 116) den zweiten Betätigungsstift (14; 114) trägt.

6. Vorrichtung nach Anspruch 5, **dadurch gekennzeichnet, daß** eine stärkere erste Feder (18) den äußeren Topf (11) gegen einen gehäusefesten Anschlag (19) drückt, daß eine schwächere zweite Feder (20) den inneren Topf (16) gegen einen Anschlag (21) am äußeren Topf (11) drückt und daß zwischen dem Boden (15) des inneren Topfes (16) und einer gehäusefesten Abstützung ein Freiraum vorgesehen ist, in dem zum Wechsel der Verstellart ein Distanzstück (17) einschiebbar oder aus ihm herausnehmbar ist.

7. Vorrichtung nach Anspruch 5 oder 6, **dadurch gekennzeichnet, daß** das Gehäuse (1; 101) eine stirnseitige Öffnung (13; 113) hat, in der der Boden (12; 112) des äußeren Topfes (11; 111) angeordnet ist.

8. Vorrichtung nach einem der Ansprüche 1 und 7, **dadurch gekennzeichnet, daß** die Außenseite des Bodens (112) des äußeren Topfes (111) eine Vertiefung (126) für ein Werkzeug zum Verdrehen der Betätigungsstifte (110, 114) relativ zur Fassung (104) aufweist.

## Claims

1. Device for reversibly positioning a valve stem with a housing (1; 101), a fitting (4; 104) for connection to a valve, a thermal actuator (5; 105) having two mutually adjustable parts (8, 9), and two operating pins (10, 14; 110, 114) to be used optionally, the first operating pin (10; 110) being taken along by the first part (8) of the actuator for one adjustment mode, and the second operating pin (14; 114) being taken along by the second part (9) of the actuator for the second adjustment mode, the respective other part of the actuator (9, 8) being supported on the housing; **characterised in that** the two operating pins (10, 14; 110, 114) are permanently mounted but mutually offset, and that the operating pins (10, 14; 110, 114) and the fitting (4; 104) are mutually displaceable in such a manner that the fitting (4; 104) is optionally aligned with the first or the second operating pin.

2. Device according to claim 1, **characterised in that** the operating pins (10, 14; 110, 114) are located on both sides of the actuator axis.

3. Device according to claim 2, **characterised in that** the fitting (4) and the operating pins (10, 14) can be offset rectilinearly in relation to each other.

4. Device according to claim 2, **characterised in that** the fitting (104) and the operating pins (110, 114) are rotatable in relation to each other around an axis.

5. Device according to one of the claims 1 to 4, **characterised in that** the actuator (5; 105) is located between the bottoms (12, 15; 112, 115) of an inner and an outer bowl (11, 16; 111, 116), and that the outer bowl (11; 111) carries the first operating pin (10; 110) and the inner bowl (16; 116) carries the second operating pin (14; 114).

6. Device according to claim 5, **characterised in that** a stronger first spring (18) presses the outer bowl (11) against a fixed stop (19) on the housing, that a weaker second spring (20) presses the inner bowl (16) against a stop on the outer bowl (11), and that between the bottom (15) of the inner bowl (16 and a support fixed on the housing a free space is provided, in or from which a distance piece (17) can be inserted or removed to change the displacement mode.

7. Device according to claim 5 or 6, **characterised in that** the housing (1; 101) has a front-side opening (13; 113), in which the bottom (12; 112) of the outer bowl (11; 111) is located.

8. Device according to one of the claims 1 to 7, **characterised in that** the outside of the bottom (112) of the outer bowl (111) has a recess (126) for a tool for displacing the operating pins (110, 114) in relation to the fitting (104).

## Revendications

1. Dispositif pour le réglage réversible d'une tige de valve, comprenant un carter (1, 101), une pièce de montage (4, 104) conçue pour le raccordement à une valve, un actionneur thermique (5, 105) présentant deux parties (8, 9) mobiles l'une par rapport à l'autre, et deux broches d'actionnement (10, 14, 110, 114) devant être utilisées sélectivement, dispositif dans lequel, pour obtenir l'un des modes de réglage, la première broche d'actionnement (10, 110) est entraînée par la première partie (8) et, pour obtenir l'autre mode de réglage, la seconde broche d'actionnement (14, 114) est entraînée par la seconde partie (9) de l'actionneur, et l'autre partie considérée dudit actionneur est en appui contre le carter, **caractérisé par le fait que** les deux broches d'actionnement (10, 14 ; 110, 114) sont montées de façon permanente, mais sont cependant décalées l'une de l'autre ; et **par le fait que** lesdites broches d'actionnement (10, 14 ; 110, 114) et la pièce de montage (4 ; 104) sont douées de mobilité relative, de telle sorte que ladite pièce de montage (4; 104) soit sélectivement alignée avec la première ou la seconde broche d'actionnement.

2. Dispositif selon la revendication 1, **caractérisé par le fait que** les broches d'actionnement (10, 14 ; 110, 114) sont agencées des deux côtés de l'axe de l'actionneur.

3. Dispositif selon la revendication 2, **caractérisé par le fait que** la pièce de montage (4) et les broches d'actionnement (10, 14) peuvent être mutuellement décalées en ligne droite.

4. Dispositif selon la revendication 2, **caractérisé par le fait que** la pièce de montage (104) et les broches d'actionnement (110, 114) peuvent tourner mutuellement autour d'un axe.

5. Dispositif selon l'une des revendications 1 à 4, **caractérisé par le fait que** l'actionneur (5 ; 105) est interposé entre les fonds (12, 15 ; 112, 115) de cuvettes (11, 16 ; 111, 116) intérieure et extérieure ; et **par le fait que** la cuvette extérieure (11 ; 111) porte la première broche d'actionnement (10 ; 110), et la cuvette intérieure (16 ; 116) porte la seconde broche d'actionnement (14 ; 114).

6. Dispositif selon la revendication 5, **caractérisé par le fait qu'**un premier ressort puissant (18) pousse la cuvette extérieure (11) contre une butée (19) solidaire du carter ; **par le fait qu'**un second ressort (20) de moindre puissance pousse la cuvette intérieure (16) contre une butée (21) située sur ladite cuvette extérieure (11) ; et **par le fait qu'**il est prévu, entre le fond (15) de la cuvette intérieure (16) et une structure d'appui solidaire du carter, un espace libre dans lequel et hors duquel une pièce d'espacement (17) peut coulisser, en vue de modifier le mode de réglage.

7. Dispositif selon la revendication 5 ou 6, **caractérisé par le fait que** le carter (1 ; 101) présente un orifice frontal (13 ; 113) dans lequel est logé le fond (12 ; 112) de la cuvette extérieure (11 ; 111).

8. Dispositif selon l'une des revendications 1 et 7, **caractérisé par le fait que** la face externe du fond (112) de la cuvette extérieure (111) comporte une creusure (126) destinée à un outil conçu pour faire tourner les broches d'actionnement (110, 114) vis-à-vis de la pièce de montage (104).
